# EUROPÄISCHE PATENTSCHRIFT

(11) **EP 3 807 988 B1**
(45) Veröffentlichungstag und Bekanntmachung des Hinweises auf die Patenterteilung: **01.11.2023**
(21) Anmeldenummer: 19718163.9
(22) Anmeldetag: 16.04.2019
(51) Int. Cl.: H02P 6/182, H02P 6/20, H02P 23/00, F02B 33/40, F02B 37/10, F02B 39/10, H02P 29/20, H02P 23/03

(54) **VERFAHREN ZUM BETREIBEN EINER ELEKTRISCHEN MASCHINE UND STEUERGERÄT**
METHOD FOR OPERATING AN ELECTRICAL MACHINE AND CONTROL UNIT
PROCÉDÉ POUR FAIRE FONCTIONNER UNE MACHINE ÉLECTRIQUE ET UNITÉ DE COMMANDE

(30) Priorität: 15.06.2018 DE 102018209710
(43) Veröffentlichungstag der Anmeldung: 21.04.2021
(73) Patentinhaber: Robert Bosch GmbH, 70442 Stuttgart (DE)
(72) Erfinder: SIEBER, Udo, 74321 Bietigheim (DE)
(86) Internationale Anmeldenummer: PCT/EP2019/059752
(87) Internationale Veröffentlichungsnummer: WO 2019/238296

(56) Entgegenhaltungen:
- EP-A1- 0 009 783
- WO-A2-2011/161408
- US-A1- 2013 307 450

## Beschreibung

Die Erfindung betrifft ein Verfahren zum Betreiben einer elektrischen Maschine, insbesondere eines Turboladers, wobei die elektrische Maschine einen Stator mit einer mehrphasigen Antriebswicklung und einem drehbar gelagerten Rotor aufweist, wobei die Antriebswicklung in Abhängigkeit von einer Winkelstellung des Rotors zur Erzeugung eines Drehmoments in zumindest einem ersten Drehzahlbereich durch eine Sinus-Kommutierung bestromt wird, wobei die Winkelstellung des Rotors in Abhängigkeit von durch den Rotor in die Antriebswicklung induzierten Phasenströmen bestimmt wird.

Weiterhin betrifft die Erfindung ein Steuergerät zum Betreiben einer elektrischen Maschine, wie sie vorstehend beschrieben wurde, wobei das Steuergerät zur Durchführung des vorstehend beschriebenen Verfahrens ausgebildet ist.

### Stand der Technik

Verfahren, elektrische Maschinen und Turbolader mit elektrischen Maschinen der eingangs genannten Art sind aus dem Stand der Technik bereits bekannt. Um auch bei niedrigen Drehzahlen einer Brennkraftmaschine ein hohes Antriebsmoment zu gewährleisten, ist es bekannt, der Brennkraftmaschine einen Turbolader vorzuschalten, der einen elektromotorisch antreibbaren Verdichter aufweist. Durch den elektromotorischen Antrieb ist die Luftfüllung in den Zylindern der Brennkraftmaschine unabhängig vom Abgasstrom der Brennkraftmaschine einstellbar. Dadurch unterscheidet sich der elektromotorisch angetriebene Turbolader in seiner Dynamik eindeutig von einem einfachen Abgasturbolader, der vom Abgasstrom einer Brennkraftmaschine angetrieben wird. Auch eine Kombination von Abgasturbolader mit elektromotorischem Hilfsantrieb, bei welchem eine elektrische Maschine in den Abgasturbolader integriert ist, ist bekannt, um das Verdichtungsverhalten des Abgasturboladers von dem Abgasstrom der zugeordneten Brennkraftmaschine zu lösen. Idealerweise soll die elektrische Maschine schon ab einer niedrigen Drehzahl, insbesondere ab Stillstand, bis zu einer Maximaldrehzahl des Turboladers sein maximales Drehmoment zur Verfügung stellen können. Für die elektronische Kommutierung der elektrischen Maschine ist daher die genaue Kenntnis der aktuellen Winkelstellung (Rotorlage) des Rotors unabdingbar. Dabei ist es bekannt, die Winkelstellung in Abhängigkeit von einer durch die Drehbewegung des Rotors in die Antriebswicklung zurückinduzierten Spannung, der sogenannten rückwirkenden Generatorspannung, zu ermitteln. Dazu werden die induzierten Phasenströme der Antriebswicklung ausgewertet. Um eine hohe Leistung der elektrischen Maschine zu erreichen, ist es außerdem bekannt, die elektrische Maschine durch eine Sinus-Kommutierung in zumindest einem Drehzahlbereich anzutreiben.

Verfahren zum Betreiben von elektrischen Maschinen sind beispielsweise aus der US 2013/307450 A1, der WO 2011/161408 A2 oder der EP 0 009 783 A1 bekannt.

### Offenbarung der Erfindung

Das erfindungsgemäße Verfahren mit den Merkmalen des Anspruchs 1 hat den Vorteil, dass eine genaue Rotorlagenbestimmung auch bei niedrigen Drehzahlen auf einfache Art und Weise gewährleistet wird. Darüber hinaus wird die Leistung der elektrischen Maschine insgesamt gesteigert. Erfindungsgemäß ist hierzu vorgesehen, dass die Antriebswicklung in einem zweiten Drehzahlbereich, der unterhalb des ersten Drehzahlbereichs liegt, durch eine Blockkommutierung bestromt wird. Während also bei hohen Drehzahlen, also innerhalb des ersten Drehzahlbereichs, die bereits verwendete Sinus-Kommutierung beibehalten wird, wird bei niedrigen Drehzahlen, in dem zweiten Drehzahlbereich, auf eine Blockkommutierung umgeschaltet. Dadurch wird erreicht, dass ein ansonsten bei niedrigen Drehzahlen durch die Sinus-Kommutierung erzeugtes Störsignal durch die für kleine Drehzahlen dominierenden Zweigverriegelungszeiten in Konstellation mit hohen Phasenströmen, vermieden wird. Die daraus ansonsten resultierenden Stromplateaus in den Nulldurchgängen der Phasenströme werden verkürzt oder gänzlich vermieden. Dadurch werden die in die Antriebswicklung induzierten Störspannungen im Statorkreis reduziert, welche die rückwirkende Generatorspannung ansonsten verfälschen würden.

Gemäß einer bevorzugten Ausführungsform der Erfindung beginnt der zweite Drehzahlbereich bei einer Drehzahl von Null beziehungsweise im Stillstand. Dadurch wird der unterste Drehzahlbereich der elektrischen Maschine blockkommutiert, mit den sich daraus ergebenden Vorteilen.

Weiterhin ist bevorzugt vorgesehen, dass der zweite Drehzahlbereich sich bis zu einer Mindestdrehzahl der Sinus-Kommutierung, bei welcher eine Winkelstellung des Rotors mittels der rückwirkenden Generatorspannung sicher (in Bezug auf die Genauigkeit der Winkelstellung) beziehungsweise ausreichend genau ermittelbar ist, erstreckt. Die Obergrenze des zweiten Drehzahlbereichs wird also dort gewählt, wo auf das übliche Verfahren mit Sinus-Kommutierung auf Basis der mittels der rückwirkenden Generatorspannung ermittelten Winkelstellung des Rotors, sicher zurückgegriffen werden kann. Diese Drehzahl ist für jede Art von elektrischer Maschine beispielsweise durch Versuche oder Berechnungen ermittelbar. Dadurch wird erreicht, dass in dem Drehzahlbereich, in welchem die Sinus-Kommutierung nicht sicher durchführbar ist, auf die sichere Blockkommutierung zurückgegriffen wird, und dass in dem Drehzahlbereich, in welchem die Sinus-Kommutierung sicher durchführbar ist, diese durchgeführt wird, um eine maximale Leistung der elektrischen Maschine zu gewährleisten.

Bevorzugt wird eine Blockkommutierung von 120° in dem zweiten Drehzahlbereich verwendet. Hierdurch ergibt sich eine vorteilhafte Auswertung der rückwirkenden Generatorspannung.

Insbesondere wird diese Art der Blockkommutierung bei einer dreiphasigen Antriebswicklung verwendet. Es ergibt sich dabei, dass eine der Phasenantriebwicklung stets unbestromt ist und sich daher für die Erfassung der Rotorlage mittels der in diese Phase induzierten rückwirkenden Generatorspannung eignet.

Bevorzugt wird die Rotorlage in Abhängigkeit von dem Verlauf einer in der unbestromten Phase induzierten Spannung ermittelt.

Alternativ ist bevorzugt vorgesehen, dass der Verlauf der induzierten Spannung mithilfe einer zusätzlichen statorseitigen Sensorwicklung ermittelt wird. Dies hat den Vorteil, dass jeweils die beiden Spulenenden der zusätzlichen Sensorwicklung Potential-ungebunden für die nachgeschaltete Elektronik zur Verfügung stehen. Mehrere Sensorwicklungen werden beispielsweise in einem Sternpunkt zusammengeschaltet.

Zur Ermittlung der Winkelstellung werden bevorzugt Spannungsteile und Filter oder eine Zenerdiode verwendet. Nach geeigneter Spannungsteilung und Filterung wird insbesondere der Nulldurchgang der induzierten Spannung detektiert. Alternativ kann bei einer getakteten Blockkommutierung die Detektion des Nulldurchgangs in den Pulspausen, vorzugsweise am Ende jeder Pause, vorgenommen werden. Hierdurch vereinfacht sich der Beschaltungsaufwand: Anstelle von Spannungsteil und Filter wird die vorstehend genannte Zenerdiode vorzugsweise mit einem geeigneten elektrischen Widerstand eingesetzt. Zur Auswertung des Nulldurchgangs wird der Spannungsabfall über die Zenerdiode berücksichtigt.

Das erfindungsgemäße Steuergerät mit den Merkmalen des Anspruchs 10 zeichnet sich dadurch aus, dass es speziell dazu hergerichtet ist, das vorstehend erfindungsgemäße Verfahren durchzuführen. Es ergeben sich hierdurch die bereits genannten Vorteile.

Weitere Vorteile und bevorzugte Merkmale und Merkmalskombinationen ergeben sich insbesondere aus dem zuvor Beschriebenen sowie aus den Ansprüchen. Im Folgenden soll die Erfindung anhand der Zeichnung näher erläutert werden. Dazu zeigen
- Figur 1: einen Turbolader in einer vereinfachten Darstellung,
- Figur 2: eine Leistungselektronik eines Steuergeräts zum Betreiben des Turboladers,
- Figur 3: eine vorteilhafte Blockkommutierung,
- Figur 4: eine vorteilhafte Ausbildung des Steuergeräts und
- Figur 5: eine weitere vorteilhafte Ausbildung des Steuergeräts.

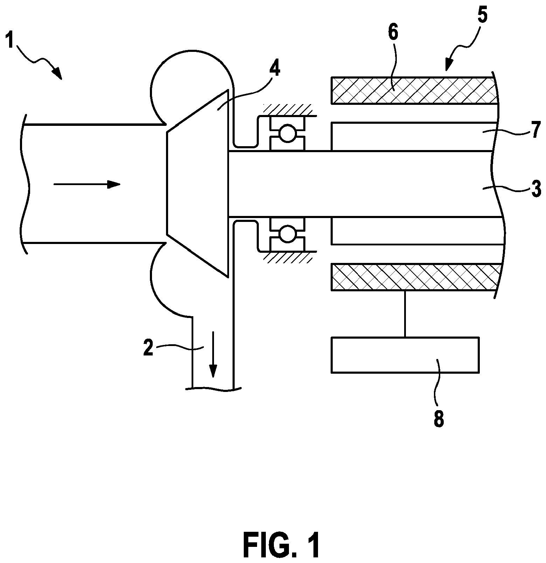

Figur 1 zeigt in einer vereinfachten Darstellung ein Turbolader 1 für eine Brennkraftmaschine eines hier nicht näher dargestellten Kraftfahrzeugs. Der Turbolader 1 weist ein Gehäuse 2 auf, in welchem eine Welle 3 drehbar gelagert ist. Die Welle 3 trägt an einem Ende ein Verdichterrad 4, welchem ein Gasstrom axial zuführbar ist, welches den Gasstrom verdichtet und radial aus dem Gehäuse 2 herausfördert, wie durch Pfeile angedeutet.

Weiterhin weist der Turbolader 1 eine elektrische Maschine 5 auf, die einen gehäusefesten Stator 6 und einen auf der Welle 3 drehfest angeordneten Rotor 7 aufweist. Der Stator 6 weist eine mehrphasige, vorliegend dreiphasige Antriebswicklung mit den Phasen U, V und W auf. Durch Bestromen der Phasen U, V, W wird ein Statormagnetfeld erzeugt, durch welches der Rotor 7 und damit die Welle 3 und das Verdichterrad 4 angetrieben werden. Hierzu ist ein Steuergerät 8 vorhanden, welches die Phasen U, V und W ansteuert.

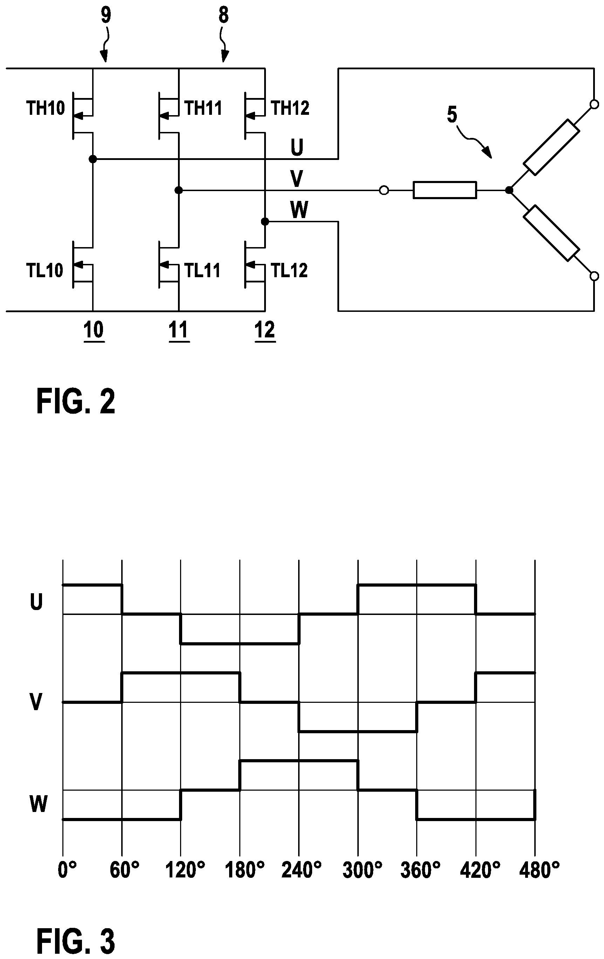

Figur 2 zeigt hierzu in einer vereinfachten Darstellung eine Leistungselektronik 9 des Steuergeräts 8. Die Leistungselektronik 9 weist eine B6-Brückenschaltung mit drei Halbbrücken 10, 11, 12 auf, die jeweils zwei durch das Steuergerät 8 ansteuerbare Halbleiterschalter TH10, TL10, TH11, TL11, TH12, TL12 aufweisen. Die Halbleiterbrücken 10, 11, 12 sind mit jeweils einer der Phasen U, V, W verbunden.

In einem ersten Drehzahlbereich von nₓ bis nₘₐₓ bis zur maximalen Drehzahl nₘₐₓ werden die Phasen U, V, W durch eine Sinus-Kommutierung angesteuert. Durch die Sinus-Kommutierung wird jedoch bei niedrigen Drehzahlen ein Störsignal durch die für kleinere Drehzahlen dominierenden Zweigverriegelungszeiten in Konstellation mit hohen Phasenströmen verursacht. Dabei stellen sich nicht gewollte Stromplateaus in den Nulldurchgängen der Phasenströme ein. Diese Stromabflachungen induzieren zusätzliche Spannungswelligkeiten im Stator beziehungsweise Statorkreis, die die rückwirkende Generatorspannung verfälschen und dadurch zu einer falschen Rotorwinkelerfassung führen können. In einem zweiten, niedrigeren Drehzahlbereich, von n₀ bis nₓ, wobei n₀ = 0 ist, werden daher vorliegend die Phasen U, V, W durch eine Blockkommutierung angesteuert.

Figur 3 zeigt hierzu in einer vereinfachten Darstellung eine 120°-Blockkommutierung, die in dem zweiten Drehzahlbereich für die Phasen U, V, W angewendet wird. Durch die drei Phasen und die 120°-Blockkommutierung wird erreicht, dass jeweils eine der Phasen unbestromt ist. Diese Phase wird dann im laufenden Betrieb dazu genutzt, die (Dreh-)Winkelstellung des Rotors 7 in Abhängigkeit von einer in diese Phase durch das Rotormagnetfeld induzierte rückwirkende Generatorspannung zu ermitteln. Die Winkelstellung wird dabei über den Verlauf der induzierten Spannung an der unbestromten Phase ermittelt.

Alternativ wird der Verlauf der induzierten Spannung über eine zusätzliche an dem Stator 6 angeordnete Sensorspule erfasst. Diese hat den Vorteil, dass jeweils die beiden Spulenenden der Sensorspule Potential-ungebunden für eine nachgeschaltete Auswerteelektronik zur Verfügung stehen.

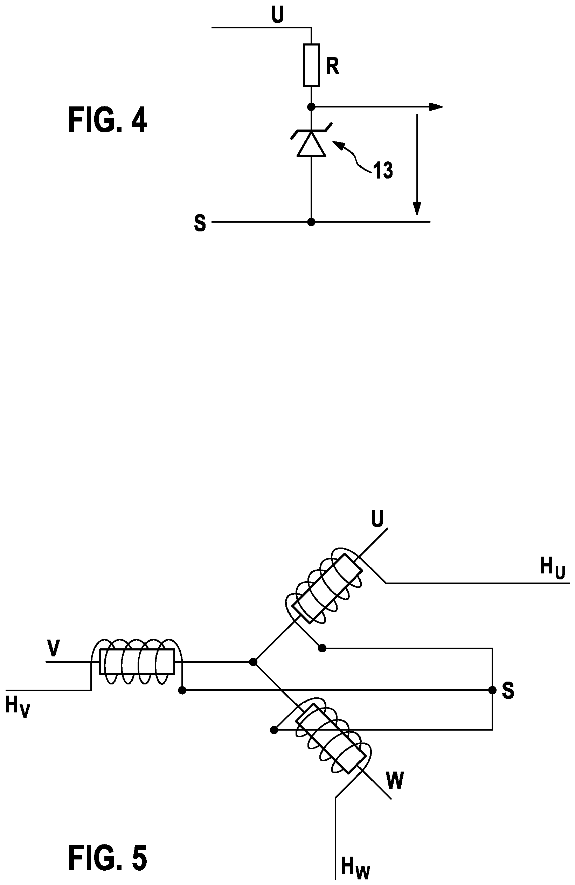

Figur 4 zeigt hierzu in einer vereinfachten Darstellung ein Sensorspulensystem, wobei jeder Phase U, V, W jeweils eine Sensorsparspule HU, HV und HW zugeordnet ist, und wobei die Sensorspulen sternförmig in einem Punkt S zusammengeschaltet sind.

Die weitere Auswertung erfolgt insbesondere auf klassischem Weg: Nach geeigneter Spannungsteilung und Filterung wird der Nulldurchgang der induzierten Spannung in der unbestromten Phase detektiert. Alternativ kann bei einer getakteten Blockkommutierung die Detektion des Nulldurchgangs in den Pulspausen, vorzugsweise am Ende der jeweiligen Pulspause, vorgenommen werden. Auf diese Weise vereinfacht sich der Schaltungsaufwand, weil Spannungsteiler und Filter durch eine mit einem geeigneten Widerstand vorbeschaltete Zenerdiode gesetzt werden. Zur Auswertung des Nulldurchgangs wird der Spannungsabfall über die Zenerdiode herangezogen, wie beispielsweise in Figur 4 gezeigt, in welcher beispielhaft Phase U, Sternpunkt S, Zenerdiode 13 und Widerstand R gezeigt sind.

Die erforderlichen Pulspausen sind durch Strombegrenzungsmaßnahmen bevorzugt ohne Drehmomentdefizite gegeben. Darüber hinaus lässt sich die vereinfachte Beschaltung direkt an den Phasenanschlüssen der elektrischen Maschine 5, also ohne Vorsehen der Sensorwicklungen, verwenden. Neben der Detektion des Durchgangs für die sensorlose Drehzahlregelung mit Blockkommutierung im unteren Drehzahlbereich sind Induktivitätsbeziehungsweise Beobachter- oder modellbasierte Verfahren ebenfalls einsatzfähig. Insbesondere letztere profitieren von den vermiedenen und eingangs beschriebenen Spannungswelligkeiten, die ansonsten bei einer Sinus-Kommutierung in niedrigen Drehzahlbereichen auftreten würden, besonders.

## Patentansprüche

1. Verfahren zum Betreiben einer elektrischen Maschine (5), insbesondere eines Turboladers (1), wobei die elektrische Maschine (5) eine mehrphasige Antriebswicklung aufweist, die in Abhängigkeit von einer Winkelstellung eines Rotors (7) der elektrischen Maschine (5) zur Erzeugung eines Drehmoments in zumindest einem ersten Drehzahlbereich durch eine Sinus-Kommutierung bestromt wird, wobei die Winkelstellung des Rotors (7) in Abhängigkeit von durch den Rotor in die Antriebswicklung induzierten Phasenströmen bestimmt wird, **dadurch gekennzeichnet, dass** die Antriebswicklung in einem zweiten Drehzahlbereich, der unterhalb des ersten Drehzahlbereichs liegt, durch eine Blockkommutierung bestromt wird.

2. Verfahren nach Anspruch 1, **dadurch gekennzeichnet, dass** der zweite Drehzahlbereich bei einer Drehzahl von Null beginnt.

3. Verfahren nach einem der vorhergehenden Ansprüche, **dadurch gekennzeichnet, dass** der zweite Drehzahlbereich sich bis zu einer Mindestdrehzahl der Sinus-Kommutierung, bei welcher eine Winkelstellung des Rotors (7) mittels einer rückwirkenden Generatorspannung sicher ermittelbar ist, erstreckt.

4. Verfahren nach einem der vorhergehenden Ansprüche, **dadurch gekennzeichnet, dass** eine 120°-Blockkommutierung in dem zweiten Drehzahlbereich verwendet wird.

5. Verfahren nach Anspruch 4, **dadurch gekennzeichnet, dass** die 120°-Blockkommutierung bei einer dreiphasigen Antriebswicklung verwendet wird.

6. Verfahren nach einem der vorhergehenden Ansprüche, **dadurch gekennzeichnet, dass** die Winkelstellung in Abhängigkeit von dem Verlauf einer in der unbestromten Phase induzierten Spannung ermittelt wird.

7. Verfahren nach einem der vorhergehenden Ansprüche, **dadurch gekennzeichnet, dass** der Verlauf der induzierten Spannung mithilfe einer zusätzlichen statorseitigen Sensorwicklung ermittelt wird.

8. Verfahren nach einem der vorhergehenden Ansprüche, **dadurch gekennzeichnet, dass** zur Ermittlung der Winkelstellung der erfasste Spannungsverlauf auf Nulldurchgänge untersucht wird.

9. Verfahren nach einem der vorhergehenden Ansprüche, **dadurch gekennzeichnet, dass** zur Ermittlung der Winkelstellung Spannungsteile und Filter oder eine Zenerdiode (13) verwendet werden.

10. Steuergerät (8) zum Betreiben einer elektrischen Maschine (5), die einen Stator (6) mit einer mehrphasigen Antriebswicklung und einen drehbar gelagerten Rotor (7) aufweist, wobei Mittel vorgesehen sind, die Winkelstellung des Rotors (7) in Abhängigkeit von durch den Rotor in die Antriebswicklung induzierten Phasenströmen zu bestimmen, und das Steuergerät (8) dazu ausgebildet ist, zum Erzeugen eines Drehmoments die Phasen der Antriebswicklung in Abhängigkeit von einer Winkelstellung des Rotors (7) zu bestromen, **dadurch gekennzeichnet, dass** das Steuergerät (8) speziell dazu hergerichtet ist, das Verfahren nach einem der Ansprüche 1 bis 9 durchzuführen.

11. Elektrische Maschine (5), insbesondere für einen Turbolader (1) einer Brennkraftmaschine, mit einem Stator (6), der eine mehrphasige Antriebswicklung aufweist, mit einem drehbar gelagerten Rotor (7) und mit einem Steuergerät (8) gemäß Anspruch 10.

12. Turbolader (1) für eine Brennkraftmaschine eines Kraftfahrzeugs, mit einem auf einer Welle drehfest gelagerten Verdichterrad (4), und mit einer elektrischen Maschine (5) zum Antreiben der Welle (3), **gekennzeichnet durch** die Ausbildung der elektrischen Maschine (5) nach Anspruch 11.

## Claims

1. Method for operating an electrical machine (5), in particular a turbocharger (1), wherein the electrical machine (5) has a multi-phase drive winding which, depending on an angular position of a rotor (7) of the electrical machine (5), is energized by sinusoidal commutation in at least one first rotational speed range to generate a torque, wherein the angular position of the rotor (7) is determined as a function of phase currents induced in the drive winding by the rotor, **characterized in that** the drive winding is energized by block commutation in a second rotational speed range which lies below the first rotational speed range.

2. Method according to Claim 1, **characterized in that** the second rotational speed range begins at a rotational speed of zero.

3. Method according to one of the preceding claims, **characterized in that** the second rotational speed range extends as far as a minimum rotational speed of the sinusoidal commutation at which an angular position of the rotor (7) can be determined reliably by means of a retroactive generator voltage.

4. Method according to one of the preceding claims, **characterized in that** 120° block commutation is used in the second rotational speed range.

5. Method according to Claim 4, **characterized in that** the 120° block commutation is used with a three-phase drive winding.

6. Method according to one of the preceding claims, **characterized in that** the angular position is determined as a function of the profile of a voltage induced in the non-energized phase.

7. Method according to one of the preceding claims, **characterized in that** the profile of the induced voltage is determined with the aid of an additional stator-side sensor winding.

8. Method according to one of the preceding claims, **characterized in that** the detected voltage profile is searched for zero crossings to determine the angular position.

9. Method according to one of the preceding claims, **characterized in that** voltage components and filters or a Zener diode (13) are used to determine the angular position.

10. Control unit (8) for operating an electrical machine (5) which has a stator (6) with a multi-phase drive winding and a rotatably mounted rotor (7), wherein means are provided to determine the angular position of the rotor (7) as a function of phase currents induced in the drive winding by the rotor, and the control unit (8) is designed to energize the phases of the drive winding as a function of an angular position of the rotor (7) to generate a torque, **characterized in that** the control unit (8) is specifically set up to carry out the method according to one of Claims 1 to 9.

11. Electrical machine (5), in particular for a turbocharger (1) of an internal combustion engine, having a stator (6) which has a multi-phase drive winding, having a rotatably mounted rotor (7) and having a control unit (8) according to Claim 10.

12. Turbocharger (1) for an internal combustion engine of a motor vehicle, having a compressor impeller (4) co-rotationally mounted on a shaft, and having an electrical machine (5) for driving the shaft (3), **characterized by** the design of the electrical machine (5) according to Claim 11.

## Revendications

1. Procédé permettant de faire fonctionner une machine électrique (5), en particulier un turbocompresseur (1), dans lequel la machine électrique (5) présente un enroulement d'entraînement polyphasé qui est alimenté en courant en fonction d'une position angulaire d'un rotor (7) de la machine électrique (5) pour générer un couple dans au moins une première plage de vitesses de rotation par une commutation sinusoïdale, dans lequel la position angulaire du rotor (7) est déterminée en fonction de courants de phase induits par le rotor dans l'enroulement d'entraînement,
**caractérisé en ce que** dans une deuxième plage de vitesses de rotation qui est inférieure à la première plage de vitesses de rotation, l'enroulement d'entraînement est alimenté en courant par une commutation en bloc.

2. Procédé selon la revendication 1, **caractérisé en ce que** la deuxième plage de vitesses de rotation commence par une vitesse de rotation égale à zéro.

3. Procédé selon l'une quelconque des revendications précédentes, **caractérisé en ce que** la deuxième plage de vitesses de rotation s'étend jusqu'à une vitesse de rotation minimale de la commutation sinusoïdale à laquelle une position angulaire du rotor (7) peut être établie sûrement au moyen d'une tension de générateur rétroactive.

4. Procédé selon l'une quelconque des revendications précédentes, **caractérisé en ce qu'**une commutation en bloc de 120° est utilisée dans la deuxième plage de vitesses de rotation.

5. Procédé selon la revendication 4, **caractérisé en ce que** la commutation en bloc de 120° est utilisée pour un enroulement d'entraînement triphasé.

6. Procédé selon l'une quelconque des revendications précédentes, **caractérisé en ce que** la position angulaire est établie en fonction de la courbe d'une tension induite dans la phase non alimentée.

7. Procédé selon l'une quelconque des revendications précédentes, **caractérisé en ce que** la courbe de la tension induite est établie à l'aide d'un enroulement de capteur côté stator supplémentaire.

8. Procédé selon l'une quelconque des revendications précédentes, **caractérisé en ce que** la courbe de tension détectée est examinée quant à des passages par zéro afin d'établir la position angulaire.

9. Procédé selon l'une quelconque des revendications précédentes, **caractérisé en ce que** des diviseurs de tension et des filtres ou une diode Zener (13) sont utilisés pour établir la position angulaire.

10. Appareil de commande (8) permettant de faire fonctionner une machine électrique (5) qui présente un stator (6) pourvu d'un enroulement d'entraînement polyphasé, et un rotor (7) monté rotatif, dans lequel des moyens sont prévus pour déterminer la position angulaire du rotor (7) en fonction de courants de phase induits par le rotor dans l'enroulement d'entraînement, et l'appareil de commande (8) est réalisé pour alimenter en courant les phases de l'enroulement d'entraînement en fonction d'une position angulaire du rotor (7) afin de générer un couple, **caractérisé en ce que** l'appareil de commande (8) est aménagé spécialement pour effectuer le procédé selon l'une quelconque des revendications 1 à 9.

11. Machine électrique (5), en particulier pour un turbocompresseur (1) dans un moteur à combustion interne, comprenant un stator (6) qui présente un enroulement d'entraînement polyphasé, comprenant un rotor (7) monté rotatif et comprenant un appareil de commande (8) selon la revendication 10.

12. Turbocompresseur (1) pour un moteur à combustion interne d'un véhicule automobile, comprenant une roue de compresseur (4) montée de manière verrouillée en rotation sur un arbre, et comprenant une machine électrique (5) pour entraîner l'arbre (3), **caractérisé en ce que** la machine électrique (5) est réalisée selon la revendication 11.
